# EUROPÄISCHE PATENTSCHRIFT

(11) **EP 0 867 792 B1**
(45) Veröffentlichungstag und Bekanntmachung des Hinweises auf die Patenterteilung: **19.02.2003**
(21) Anmeldenummer: 98105031.3
(22) Anmeldetag: 19.03.1998
(51) Int. Cl.: G05B 19/10

(54) **Betätigungsvorrichtung mit Sicherung gegen ungewollte Bedienung**
Switching device with protection against undesired use
Dispositif de commande avec sécurité contre une utilisation non desirée

(30) Priorität: 26.03.1997 DE 19712832
(43) Veröffentlichungstag der Anmeldung: 30.09.1998
(73) Patentinhaber: BSH Bosch und Siemens Hausgeräte GmbH, 81669 München (DE)
(72) Erfinder: Tauscher, Helmut, Dipl.-Ing. (FH), 94469 Deggendorf (DE)

(56) Entgegenhaltungen:
- EP-A- 0 448 087
- EP-A- 0 565 976
- EP-A- 0 844 325
- DE-A- 3 823 812
- DE-A- 4 432 399
- DE-A- 4 446 883
- GB-A- 2 262 820

## Beschreibung

Die Erfindung bezieht sich auf eine Betätigungsvorrichtung mit Sicherung gegen ungewollte Bedienung gemäß Patentanspruch 1.

Eine derartige Sicherung ist z.B. für die Bedienung von Consumergeräten, insbesondere für Haushaltsgeräte, wie z.B. für einen Programmwahlschalter einer Waschmaschine bzw. eines Geschirrspülers bzw. eines Herdes verwendbar.

Bei bekannten Betätigungsvorrichtungen steht rückseitig zu einer gehäuseseitigen Frontblende ein mechanischer Drehwahlschalter als Bestandteil einer, z.B. auf einer Leiterplatte, angeordneten Steuervorrichtung über eine mechanische Drehwelle mit einem vorderseitig zu der Frontblende liegenden Betätigungsknopf in Mitnahmeverbindung. Symbole bzw. Piktogramme der Anzeigen der durch Betätigen, insbesondere Drehen, des Betätigungsknopfes einstellbaren verschiedenen Schalterstellungen sind auf der Frontblende fest aufgetragen.

Es ist weiterhin z.B. bei Consumergeräten bekannt, Einstellungen, die gegenüber Kindern abgesichert werden sollen, entweder über gleichzeitiges Betätigen von mehreren Tasten oder durch Betätigen von Sondertasten, sogenannten Schlüsseltasten, bzw. durch Eingaben von speziellen Sperrcodes vorzunehmen. Bei Haushaltsgeräten hat man z.B. durch mechanische Lösung in Form von versenkten Schalt-Knebeln bei Herdsteuerungen eine Kindersicherung versucht.

Aus der DE 44 32 399 A ist eine Bedienblende eines Haushaltgeräts mit einer Vertiefung bekannt, die den Rotor eines Schalters aufnimmt. Auf der dem Schalter gegenüberliegenden Seite der Bedienblende ist als Stator eine Leiterkarte angeordnet, auf der sich magnetempfindliche Sensoren befinden. Der Rotor beinhaltet einen Permanentmagneten, der abhängig von seiner Schalterstellung auf die auf der Leiterkarte befindlichen Sensoren wirkt.

In der nicht vorveröffentlichten EP 0 844 325 A ist eine Betätigungsvorrichtung in Form eines Programmwahlschalters für eine Waschmaschine offenbart. An der Vorderseite einer Frontblende ist ein Dreh-Betätigungsknopf vorgesehen, der als ein Teil eines GMR-Schalters einen feldorientierten Magneten aufweist und unter Nutzung des sogenannten magnetoresistiven Effektes berührungslos mit einem Magnetfeld-Sensor auf einer Leiterplatte derart zusammenarbeitet, dass bei Drehen des Dreh-Betätigungsknopfes und damit beim Verändern der Feldorientierung des Magneten unterschiedliche Stellimpulse auf den Magnetfeld-Sensor übertragen werden.

Bei diesen bekannten Betätigungsvorrichtungen ist der Permanentmagnet im Dreh-Betätigungsknopf auf der Vorderseite der Frontblende angeordnet, wobei sich der Magnetfeldsensor auf der Rückseite befindet.

Im Gegensatz zu diesen bekannten Anordnungen weist die Betätigungsvorrichtung der vorliegenden Anmeldung einen rückseitigen Permanentmagneten und einen vorderseitigen Magnetfeld-Sensor auf. Ferner ist dieser Magnetfeld-Sensor mit einer Auswertevorrichtung versehen, die die Daten des vorderseitigen Magnetfeld-Sensors durch ein Übertragungsmittel an die rückseitige Steuervorrichtung überträgt.

Gemäß Aufgabe vorliegender Erfindung soll, insbesondere als Kindersicherung, auf einfache Weise die Betätigung bzw. der Zugang zu einer gehäuseinneren, von der Betätigungsvorrichtung in Einstellabhängigkeit stehenden Steuervorrichtung durch unberechtigte Personen verhinderbar sein.

Die Lösung der vorgenannten Aufgabe gelingt erfindungsgemäß durch die Lehre des Patentanspruchs 1; vorteilhafte Ausgestaltungen der Erfindung sind jeweils Gegenstand der Unteransprüche.

Vorrichtungen, deren u.a. unterschiedliche Winkelpositionen durch Drehung eines Magneten zur berührungslosen Widerstandsänderung in einem magnetoresistiven Sensor detektierbar sind, werden z.B. in der WO 94/17426 bzw. in der darin eingangs zitierten Philips-Druckschrift "Technische Information TI 901228" beschrieben.

Durch die erfindungsgemäße Sicherung ist es möglich, das für die Betätigung der Steuervorrichtung notwendige äußere Betätigungsmittel, insbesondere in Form eines Dreh-Betätigungsknopfes, auf einfache Weise nur der berechtigten Bedienperson dadurch zuzuordnen, daß diese das Betätigungsmittel nur zum Zwecke einer beabsichtigten Bedienung zumindest in eine solche Nähe zum zweiten Teil des vorgesehenen GMR-Schalters bringt, bei der eine berührungslose Wirkverbindung gegeben ist; durch die Anordnung des Magnetfeld-Gebers, insbesondere in Form eines Dauermagneten, auf der Rückseite der Frontblende und des Magnetfeld-Empfängers mit zugeordneter Auswerte-Vorrichtung als Bestandteil des Dreh-Betätigungsknopfes auf der Vorderseite ist die Sicherung vor einer Fehlbedienung dadurch weiter verbesserbar, daß nur ein spezifisch codiertes Betätigungsmittel an eine bestimmte Steuervorrichtung adressierbar ist.

Die Signalübermittlung zwischen der vorderseitigen Auswertevorrichtung und der rückseitigen Steuervorrichtung erfolgt zweckmäßigerweise berührungsfrei über eine Infrarot-Übertragung oder über Schleifkontakte, die vorzugsweise in der Frontblende angeordnet und mit Anschlüssen zu der vorderseitigen Auswerte-Vorrichtung einerseits bzw. zu der rückseitigen Steuervorrichtung andererseits versehen sind.

Aufgrund der fehlenden mechanischen Wellenverbindung zwischen rückseitiger, vorzugsweise auf einer Leiterplatte angeordneter, Steuervorrichtung einerseits und vorderseitigem Dreh-Betätigungsknopf andererseits kann darüber hinaus in vorteilhafter Weise gewährleistet werden, daß die zwischenliegende Frontblende als geschlossene Schutz-Trennwand ohne Durchbruch für eine mechanische Wellenverbindung ausbildbar ist und somit bei entferntem äußeren Betätigungsmittel auch eine Kindersicherung hinsichtlich eines ungewollten, unter Umständen gefährlichen Zugangs zu der rückseitig der Schutz-Trennwand vorgesehenen Elektronik bei entferntem Betätigungsknopf gewährleistet werden kann.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: die Seitenansicht einer Betätigungsvorrichtung eines Programmwahlschalters für eine Waschmaschine mit einem an der Vorderseite einer gehäuseseitigen Frontblende angeordneten Dreh-Betätigungsknopf eines magnetoresistiven Schalters mit integriertem Magnetfeld-Sensor und einer auf der Rückseite der Frontblende angeordneten Steuervorrichtung mit einem zugeordneten Magnetfeld-Geber mit Infrarot-Signalübertragung;
- FIG 2: die Vorderseite der Betätigungsvorrichtung gemäß FIG 1 mit entferntem Dreh-Betätigungsknopf;
- FIG 3: die Seitenansicht einer Betätigungsvorrichtung eines Programmwahlschalters für eine Waschmaschine mit einem an der Vorderseite einer Frontblende angeordneten Dreh-Betätigungsknopfs eines magnetoresistiven Schalters mit integriertem Magnetfeld-Empfänger und einer auf der Rückseite der Frontblende angeordneten Steuervorrichtung mit einem magnetoresistiven Magnetfeld-Geber sowie mit zwischen beiden angeordnetem Flüssigkristall-Anzeigefeld;
- FIG 4: die Vorderseite der Betätigungsvorrichtung gemäß FIG 3 mit einem von einem ersten Grundprogramm angesteuerten Flüssigkristall-Anzeigefeld;
- FIG 5: die Vorderseite der Betätigungsvorrichtung gemäß FIG 3 mit einem von einem zweiten Grundprogramm angesteuerten Flüssigkristall-Anzeigefeld;
- FIG 6: die Seitenansicht einer Betätigungsvorrichtung eines Programmwahlschalters für eine Waschmaschine mit einem an der Vorderseite einer Frontblende angeordneten Dreh-Betätigungsknopf eines magnetoresistiven Schalters mit integriertem Magnetfeld-Sensor und einer auf der Rückseite der Frontblende angeordneten Steuervorrichtung mit einem magnetoresistiven Magnetfeld-Geber und einer Signalübertragung durch Schleifkontakte;
- FIG 7: die Vorderansicht der Betätigungsvorrichtung gemäß FIG 6 bei entferntem Dreh-Betätigungsknopf.

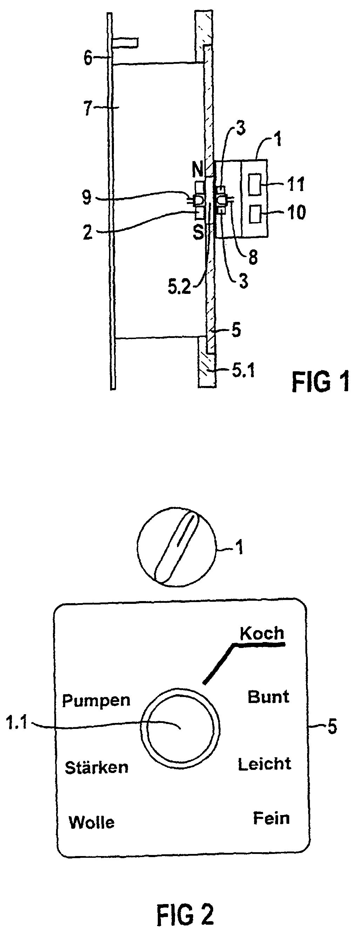

FIG 1 zeigt die Seitenansicht einer Betätigungsvorrichtung eines Programmwahlschalters für eine Waschmaschine. An der Vorderseite einer von einem Frontblenden-Träger 5.1 gehaltenen Frontblende 5 ist als Schalter 1 ein Dreh-Betätigungsknopf in Betriebsstellung gebracht, der als Teil eines GMR-Schalters einen Magnetfeld-Empfänger 3 aufnimmt, der unter Nutzung des sogenannten magnetoresistiven GMR-Effektes berührungslos mit einem rückseitig zu der Frontblende 5 angeordneten Magnetfeld-Geber 2 in Form eines Dauermagneten N;S derart zusammenwirkt, daß bei Drehen des Dreh-Betätigungsknopfes und somit Verändern der Feldorientierung des Magentfeld-Gebers 2 relativ zu dem Magnetfeld-Empfänger 3 unterschiedlich spezifische analoge Stellsignale in einer dem Magnetfeld-Empfänger 3 nachgeschalteten, ebenfalls in dem Dreh-Betätigungsknopf aufgenommenen und aus einer Batterie 10 gespeisten Auswertevorrichtung 11 detektierbar sind und über einen vorderseitigen Infrarot-Sender 8 auf einen zu der Frontblende 5 rückseitigen Infrarot-Empfänger 9 übertragen werden, der in Wirkverbindung mit einer auf einer Leiterplatte angeordneten Steuervorrichtung 6 in Verbindung steht. Um einen Stellwinkel von 360° detektieren zu können ist der Magnetfeld-Empfänger 3 in an sich bekannter Weise aus zwei um 90° zueinander versetzten GMR-Sensoren gebildet.

Ist ein bestimmter Stellwinkel mit Hilfe des Magnetfeld-Empfängers 3 und der Auswertevorrichtung 11 erkannt, so wird dieser Winkel zweckmäßigerweise in der Auswertevorrichtung 11 in ein zugehöriges Bit-Muster umgewandelt und dieses über die Schnittstelle zwischen der vorderseitigen Auswertevorrichtung 11 einerseits und der rückseitigen Steuervorrichtung 6 andererseits auf die rückseitige Steuervorrichtung 6 übertragen. Eine zusätzliche Adresscodierung zwischen einem Schalter 1 und einer bestimmten Steuervorrichtung 6 kann in vorteilhafter Weise durch zusätzliche Bits erreicht werden, deren Muster nur von einer bestimmten Steuervorrichtung 6 erkannt wird.

Die Frontblende 5 ist zumindest im Bereich der Übertragungsstrecke zwischen dem Infrarot-Sender 8 und dem Infrarot-Empfänger 9 mit einen Lichtdurchlaß 5.2 versehen.

FIG 2 zeigt die Vorderansicht auf die Frontblende 5 der Betätigungsvorrichtung gemäß FIG 1; bei aus seiner Betriebsstellung im Sinne einer Sicherung gegen unbefugte Betätigung entferntem Schalter 1 in Form eines Dreh-Betätigungsknopfes. Die Benennung für die einzelnen Schalterstellungen des Dreh-Betätigungsknopfes sind im wesentlichen zentrisch um die fiktive Drehachse des Dreh-Betätigungsknopfes verteilt auf die in diesem Bereich vorzugsweise mattierte, jedoch hintergrundseitig durch einen Lichtkasten 7 beleuchtbare Frontblende 5 aufgetragen. Obwohl eine Wirkverbindung zwischen dem Dreh-Betätigungsknopf mit seinem Magnetfeld-Sensor 3 einerseits und dem Magnetfeld-Geber 2 andererseits auch bei von der fiktiven Drehachse leicht abweichender und nicht genau ausgerichteter Stellung möglich ist, kann eine formschlüssige Positionierhilfe in Form eines Dreh-Steck-Stiftes im Verlauf der fiktiven Drehachse an der Vorderseite der Frontblende 5 vorgesehen sein, auf den der Dreh-Betätigungsknopf mit einer entsprechenden Führungshülse aufsteckbar ist oder es kann lediglich eine optische Justiermarkierung im Sinne einer Drehmarkierung 1.1 auf der Frontblende 5 vorgesehen sein.

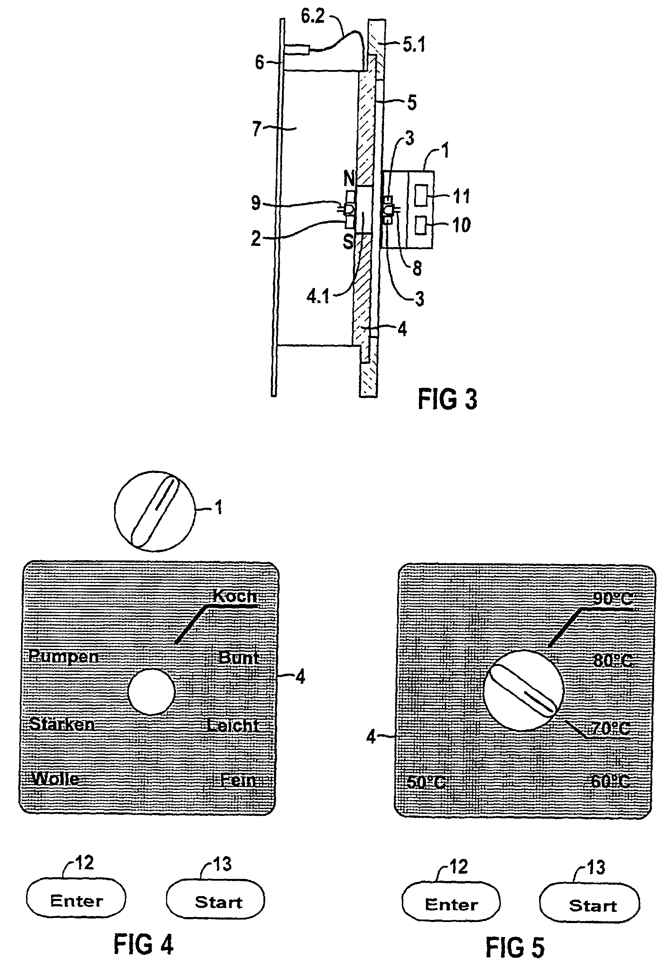

FIG 3 zeigt eine ähnliche Betätigungsvorrichtung für einen Programmwahlschalter einer Waschmaschine, bei der jedoch hinter der durchsichtigen Frontblende 5 ein Flüssigkristall-Anzeigefeld 4 vorgesehen ist, das einerseits eine geschlossene Schutztrennwand darstellt und andererseits im Sinne einer Multifunktionsanzeige - wie z.B. aus FIG 4 bzw. FIG 5 ersichtlich - mit verschiedenen Anzeigen über eine mit der Steuervorrichtung 6 auf der Leiterplatte über eine Leiterplatten-Verbindung 6.2 belegbar ist. Dazu werden die einzelnen Segmente über die Leiterplatten-Verbindung 6.2 derart polarisiert, daß Schaltstellungssymbole frontseitig durch das diffuse Licht eines hinter dem Flüssigkristall-Anzeigefeld 4 angeordneten Lichtkastens 7 in Leuchtschrift darstellbar sind.

FIG 4 bzw. FIG 5 zeigen die vorteilhafte Multfunktionsausnutzung des gleichen Flüssigkristall-Anzeigefeldes 4 und des gleichen Schalter 1, derart daß zur Einstellung der jeweiligen Funktion nach einer Ausgestaltung der Erfindung eine "Enter"-Taste 13 vorgesehen ist, durch deren unterschiedliches gezieltes mehrfaches Betätigen sukzessiv die verschiedenen Funktionen einstellbar und durch Drücken einer "Start"-Taste 11 jeweils in Gang setzbar sind. FIG 4 zeigt ein erstes Grundprogramm zur Einstellung verschiedener Waschprogramme, FIG 5 zeigt ein zweites Grundprogramm zur Einstellung verschiedener, hier beispielhaft einzeln bezeichneter Waschtemperaturen. In FIG 1 ist wiederum der Schalter 1 in entfernter Stellung und in FIG 5 in zugeführter Bedienstellung eingetragen.

In FIG 3 ist zur Übertragung der Signalwerte der Auswerte-Elektronik 11 zu der Steuervorrichtung auf der Leiterplatte 6 wiederum eine Infrarotstrecke mit einem vorderseitigen Infrarot-Sender 8 und einem rückseitigen Infrarot-Empfänger 9 vorgesehen, wozu das Flüssigkristall-Anzeigefeld 4 zweckmäßigerweise im Bereich der Infrarot-Übertragungsstrecke mit einem Lichtdurchlaß 4.1 versehen ist. Die in den Schalter 1 integrierte Auswerte-Elektronik 11 wird wiederum von einer ebenfalls von dem Schalter 1 aufgenommenen Batterie 10 gespeist.

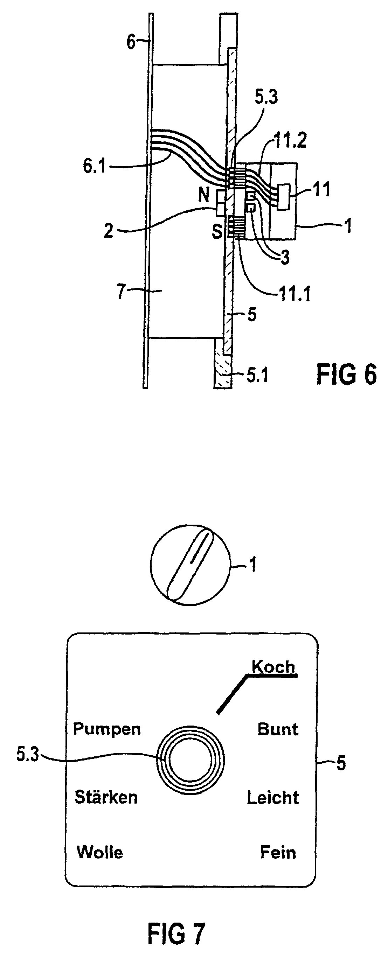

Im Unterschied zu der Betätigungvorrichtung nach FIG 1 und FIG 3, bei der eine Signalübertragung durch eine Infrarot-Strecke und eine Spannungsversorgung der Auswertevorrichtung 11 durch eine Batterie 10 vorgesehen ist, erfolgt bei einem weiteren Ausführungsbeispiel gemäß FIG 6;7 der Erfindung sowohl die Stromversorgung der Auswertevorrichtung 11 als auch die Signalübertragung zwischen der Auswertevorrichtung 11 und der Steuervorrichtung 6 auf der Leiterplatte über Schleifkontaktbahnen 5.3, die von der Frontplatte 5 aufgenommen worden sind und einerseits über Schleifkontakte 11.1 und Schleifkontakt-Anschlüsse 11.2 vorderseitig mit der Auswertevorrichtung 11 verbunden und rückseitig über Leiterplatten-Verbindungen 6.1 an die Steuervorrichtung 6 angeschlossen sind.

FIG 7 zeigt wiederum die Vorderansicht der Frontblende 5 gemäß FIG 6 bei weggenommenem Schalter 1. Zentrisch zu der Bedienstelle des Dreh-Betätigungsknopfes auf der Frontblende 5 sind vier Schleifkontaktbahnen 5.3 eingetragen, von denen je zwei der Signalübertragung von der Auswertevorrichtung 11 und je zwei zur Stromversorgung der Auswertevorrichtung 11 von der rückseitigen Steuervorrichtung 6 dienen.

Die im Rahmen der Erfindung vorgesehenen "magnetischen Schalter" in Form von sogenannten MR (Magneto Resistance)- bzw. GMR (Giant Magneto Resistance)-Schaltern nutzen den sogenannten magnetoresistiven Effekt aus, der darauf beruht, daß bei Einwirken eines Magnetfeldes auf ein Metall oder einen Halbleiter dessen elektrischer Widerstand verändert wird.

## Patentansprüche

1. Betätigungsvorrichtung, insbesondere Programmwahlschalter für eine Waschmaschine bzw. für einen Herd bzw. für einen Geschirrspüler, mit Sicherung gegen ungewollte Bedienung, mit einer berührungslosen Betätigungsübertragung zwischen einem vorderseitigen Schalter (1), insbesondere einem Dreh-Betätigungsknopf, und einer rückseitigen Steuervorrichtung (6) unter Nutzung des sogenannten magnetoresistiven (GMR)-Effektes, **dadurch gekennzeichnet, dass** die Betätigunsvorrichtung
- einen rückseitigen, fest positionierten Magnetfeld-Geber (2), insbesondere einen Dauermagneten (N;S) aufweist sowie
- einen zugeordneten beabstandeten vorderseitigen, mittels des Schalters (1), insbesondere des Dreh-Betätigungsknopfes, relativ zu dem Feld des Magnetfeld-Gebers (2) verstellbaren Magnetfeld-Empfänger (3) mit Auswertevorrichtung (11) und
- ein Übertragungsmittel (8.1;8.2 bzw.11.1;11.2;6.1) für die Daten des vorderseitigen Magnetfeld-Empfängers (3) an die rückseitige Steuervorrichtung (6).

2. Betätigungsvorrichtung nach dem vorhergehenden Anspruch
- mit einer Datenübertragungs-Schnittstelle zwischen dem Schalter (1), insbesondere dem Dreh-Betätigungsknopf, und der rückseitigen Steuervorrichtung (6) in Form einer berührungslosen Infrarot-Übertragungsvorrichtung (8;9).

3. Betätigungsvorrichtung nach dem vorhergehenden Anspruch
- mit einer Datenübertragungs-Schnittstelle zwischen dem Schalter (1), insbesondere dem Dreh-Betätigungsknopf, und der rückseitigen Steuervorrichtung (6) in Form einer Schleifkontakt-Übertragung (11.1;11.2;6.1).

4. Betätigungsvorrichtung nach zumindest einem der vorhergehenden Ansprüche
- mit einer autarken Stromversorgung der vorderseitigen Meß-, Stell- bzw. Steuermittel des Schalters (1), insbesondere durch eine in diesem angeordnete Batterie (10).

5. Betätigungsvorrichtung nach zumindest einem der vorhergehenden Ansprüche 1-3
- mit einer Stromversorgung der vorderseitigen Meß-, Stell- bzw. Steuermittel des Schalters (1) über eine Schnittstelle, insbesondere über Schleifkontakte (11.2), zu der rückseitigen Steuervorrichtung (6).

6. Betätigungsvorrichtung nach zumindest einem der vorhergehenden Ansprüche 2-5
- mit einer elektronischen Schlüsselzuordnug zwischen dem Schalter (1), insbesondere dem Dreh-Betätigungsknopf, und der rückseitigen Steuervorrichtung (6) über die Datenübertragungs-schnittstelle.

7. Betätigungsvorrichtung nach zumindest einem der vorhergehenden Ansprüche
- mit einer geschlossenen Schutz-Trennwand, insbesondere in Form einer Frontblende (5), zwischen der rückseitigen Steuervorrichtung (6) einerseits und dem vorderseitigen Schalter (1), insbesondere dem Dreh-Betätigungsknopf, andererseits.

8. Betätigungsvorrichtung nach dem vorhergehenden Anspruch 7
- mit einer eine Einstellanzeige für den Schalter (1), insbesondere in konzentrischer Anordnung zu diesem, aufweisenden Frontblende (5).

9. Betätigungsvorrichtung nach zumindest einem der vorhergehenden Ansprüche
- mit einer Schutz-Trennwand, die ein mit Einstellanzeigen des Schalters (1), insbesondere des Dreh-Betätigungsknopfes, ansteuerbares Flüssigkristall-Anzeigefeld (4) enthält.

10. Betätigungsvorrichtung nach dem vorhergehenden Anspruch
- mit einem im Sinne einer Multifunktionsanzeige mit wechselnden Funktionsanzeigen und/oder Funktionsablauf-Anzeigen ansteuerbaren Flüssigkristall-Anzeigefeld (4).

## Claims

1. Actuating device, particularly program selector switch for a washing machine, an oven or a dishwasher, with security against unintended operation, with a contactless actuating transmission between a switch (1) at the front side, particularly a rotary actuating knob, and a control device (6) at the rear side with use of so-called magnetoresistive (GMR) effect, **characterised in that** the actuating device comprises a fixedly positioned magnetic field transmitter (2) at the rear side, particularly a permanent magnet (N; S), as well as an associated magnet field receiver (3), which is spaced at the front side and adjustable by means of the switch (1), particularly the rotary actuating knob, relative to the field of the magnetic field transmitter (2), with an evaluating device (11) and a transmission means (8.1; 8.2 or 11.1; 11.2; 6.1) for the data of the magnetic field receiver (3), which is at the front side, to the control device (6) at the rear side.

2. Actuating device according to the preceding claim, with a data transmission interface between the switch (1), particularly the rotary actuating knob, and the control device (6), which is at the rear side and in the form of a contactless infrared transmission device (8; 9).

3. Actuating device according to the preceding claim, with a data transmission interface between the switch (1), particularly the rotary actuating knob, and the control device (6), which is at the rear side and in the form of a wiper contact transmission (11.1; 11.2; 6.1).

4. Actuating device according to at least one of the preceding claims, with an autonomous current supply of the measuring, setting or control means, which is at the front side, of the switch (1), particularly by a battery (10) arranged therein.

5. Actuating device according to at least one of the preceding claims 1 to 3, with a current supply of the measuring, setting or control means, which is at the front side, of the switch (1), by way of an interface, particularly by way of wiper contacts (11.2), to the control device (6) at the rear side.

6. Actuating device according to at least one of the preceding claims 2 to 5, with an electronic key association between the switch (1), particularly the rotary actuating knob, and the control device (6), which is at the rear side, by way of the data transmission interface.

7. Actuating device according to at least one of the preceding claims, with a closed protective partition wall, particularly in the form of a front panel (5), between on the one hand the control device (6) at the rear side and on the other hand the switch (1), particularly the rotary actuating knob, at the front side.

8. Actuating device according to the preceding claim 7, with a front panel (5) having a setting indication for the switch (1), particularly in concentric arrangement thereto.

9. Actuating device according to at least one of the preceding claims, with a protective partition wall which contains a liquid crystal display field (4) controllable with setting indications of the switch (1), particularly the rotary actuating knob.

10. Actuating device according to the preceding claim, with a liquid crystal display field (4) controllable in the sense of a multi-function display with alternating function indications and/or function sequence indications.

## Revendications

1. Dispositif d'actionnement, en particulier commutateur de sélection de programme pour un lave-linge resp. pour une cuisinière resp. pour un lave-vaisselle, avec sécurité contre une utilisation non voulue, avec une transmission de l'actionnement sans contact entre un commutateur du coté avant (1), en particulier un bouton d'actionnement rotatif, et un dispositif de commande du coté arrière (6) en utilisant l'effet magnétorésistif (GMR), **caractérisé en ce que** le dispositif d'actionnement présente un indicateur de champ magnétique (2) du coté arrière, positionné fixement, en particulier un aimant permanent (N ; S) ainsi qu'un récepteur de champ magnétique (3) du coté avant, à distance, associé, réglable au moyen du commutateur (1), en particulier du bouton d'actionnement rotatif, par rapport à la zone de l'indicateur de champ magnétique (2), avec un dispositif d'évaluation (11) et un moyen de transmission (8.1 ; 8.2 resp. 11.1 ; 11.2 ; 6.1) pour les données du récepteur à champ magnétique du coté avant (3) sur le dispositif de commande arrière (6).

2. Dispositif d'actionnement selon la revendication précédente
- avec une interface de transmission de données entre le commutateur (1), en particulier le bouton d'actionnement rotatif, et le dispositif de commande du coté arrière (6) en forme de dispositif de transmission à infrarouge sans contact (8 ; 9).

3. Dispositif d'actionnement selon la revendication précédente
- avec une interface de transmission de données entre le commutateur (1), en particulier le bouton d'actionnement rotatif, et le dispositif de commande du coté arrière (6) en forme d'une transmission par contact glissant (11.1 ; 11.2 ; 6.1).

4. Dispositif d'actionnement selon au moins l'une des revendications précédentes
- avec une alimentation en courant autonome des moyens de mesure, de réglage resp. de commande avant du commutateur (1), en particulier par une batterie (10) disposée dans celui-ci.

5. Dispositif d'actionnement selon au moins l'une des revendications précédentes 1 à 3
- avec une alimentation en courant des moyens de mesure, de réglage resp. de commande avant du commutateur (1) au moyen d'une interface, en particulier par des contacts glissants (11.2), par rapport au dispositif de commande arrière (6).

6. Dispositif d'actionnement selon au moins l'une des revendications précédentes 2 à 5
- avec une association par code électronique entre le commutateur (1), en particulier le bouton d'actionnement rotatif, et le dispositif de commande arrière (6) au moyen de l'interface de transmission de données.

7. Dispositif d'actionnement selon au moins l'une des revendications précédentes
- avec une paroi séparatrice de protection fermée, en particulier en forme d'écran frontal (5), entre le dispositif de commande arrière (6), d'une part, et le commutateur avant (1), en particulier le bouton d'actionnement rotatif, d'autre part.

8. Dispositif d'actionnement selon la revendication précédente 7
- avec un écran frontal (5) présentant une indication de réglage pour le commutateur (1), en particulier de façon concentrique par rapport à celui-ci.

9. Dispositif d'actionnement selon au moins l'une des revendications précédentes
- avec une paroi séparatrice de protection, qui comprend une zone d'affichage à cristaux liquides (4) pouvant être commandée avec des indications de réglage du commutateur (1), en particulier le bouton d'actionnement rotatif.

10. Dispositif d'actionnement selon la revendication précédente
- avec une zone d'affichage à cristaux liquides (4) pouvant être commandée au sens d'une indication multifonctions avec des indications de fonction alternées et-/-ou des indications de déroulement fonctionnel.
